# EUROPEAN PATENT SPECIFICATION

(11) **EP 3 067 631 B1**
(45) Date of publication and mention of the grant of the patent: **17.01.2018**
(21) Application number: 14860073.7
(22) Date of filing: 14.02.2014
(51) Int. Cl.: F24D 10/00, F24D 19/10

(54) **CONTROL SYSTEM FOR HEAT EXCHANGE BETWEEN DISTRICT HEATING NETWORKS, AND METHOD FOR SAME**
STEUERUNGSSYSTEM FÜR WÄRMEAUSTAUSCH ZWISCHEN FERNWÄRMENETZWERKEN UND VERFAHREN DAFÜR
SYSTÈME DE COMMANDE D'ÉCHANGE DE CHALEUR ENTRE DES RÉSEAUX DE CHAUFFAGE URBAIN, ET PROCÉDÉ ASSOCIÉ

(30) Priority: 08.11.2013 KR 20130135635
(43) Date of publication of application: 14.09.2016
(73) Proprietor: Korea Institute of Energy Research, Daejeon 305-343 (KR)
(72) Inventor: IM, Yong Hoon, Daejeon 305-755 (KR); LEE, Jae Yong, Seoul 135-506 (KR); CHUNG, Dae Hun, Seoul 135-090 (KR)
(74) Representative: Vossius & Partner Patentanwälte Rechtsanwälte mbB
(86) International application number: PCT/KR2014/001234
(87) International publication number: WO 2015/068899

(56) References cited:
- WO-A2-2008/102292
- DE-U1-202012 103 891
- JP-A- H06 341 302
- JP-A- H06 341 302
- JP-A- 2001 153 381
- KR-A- 20120 104 372
- KR-A- 20130 047 788

## Description

### [Technical Field]

The present invention relates to a system and method for controlling a heat exchange between district heating networks.

### [Background Art]

A district heating system is a community energy supply system that supplies a heat source such as high-pressure steam, high-pressure hot water, etc. to buildings such as a house, a shopping arcade, an office, a school, a hospital, a factory, etc. located within a certain range from a large centralized heat production facility.

A district heating system is composed of a heat production facility that produces a heat source, a circulating pump that circulates the heat source generated by the heat production facility, etc. A pipe for supplying and collecting the heat source to and from a region to which heat is to be supplied is connected to the circulating pump. A heat exchanger of a customer is connected to the pipe and configured to supply heat energy provided through the heat source to the customer to heat his/her house and water.

However, a district heating system must be continuously supplied with fuel to supply a heat source. That is, the district heating system supplies only as many heat sources as its fuel consumption, thus having problems of high fuel consumption and low thermal efficiency.

Accordingly, a variety of research has been conducted to decrease fuel consumption of a district heating system and increase its thermal efficiency.

### [Disclosure]

### [Technical Problem]

The present invention is directed to providing a system and method for controlling a heat exchange between different district heating networks. The system and method can decrease fuel consumption of the district heating networks
and increase their thermal efficiency through an effective heat exchange between the district heating networks.

### [Technical Solution]

According to an embodiment of the present invention, a system for controlling a heat exchange between different district heating networks includes a heat pump connected between a return pipe of a first district heating network and a supply pipe of a second district heating network and configured to perform a heat exchange between a first heat source of the return pipe of the first district heating network and a second heat source of the supply pipe of the second district heating neatwork, a plurality of temperature sensors configured to acquire temperatures of the first heat source and the second heat source, and a control device configured to control a heat exchange direction of the heat pump between the first heat source and the second heat source based on the temperatures of the first heat source and the second heat source.

According to an embodiment of the present invention, a method of controlling a heat exchange between different district heating networks by a heat exchange control system includes acquiring temperatures of a first heat source returned through a return pipe of a first district heating network and a second heat source supplied through a supply pipe of a second district heating network, determining a heat exchange direction based on the temperatures of the first heat source and the second heat source, and operating a heat pump connected between the return pipe of the first district heating network and the supply pipe of the second district heating network to perform a heat exchange between the first heat source and the second heat source according to the heat exchange direction.

### [Advantageous Effects]

The system and method for controlling a heat exchange between district heating networks, which are disclosed in this document can decrease fuel consumption of a district heating network and increase its thermal efficiency by utilizing a waste heat source that has been used and collected through a return pipe of a district heating network to increase the temperature of a heat source supplied by the other district heating network through a heat exchange between the district heating networks or by using a low-temperature heat source supplied by the other district heating network to increase the temperature of the used and collected waste heat source of a return pipe of a district heating network up to the supplying temperature of the district heating network.

### [Description of Drawings]

FIG. 1 is a structural diagram schematically showing a system for controlling a heat exchange between district heating networks according to an embodiment of the present invention.
FIG. 2 is a diagram for describing an operation of a heat pump according to an embodiment of the present invention.
FIGS. 3 and 4 show examples in which a heat exchange direction is controlled in a system for controlling a heat exchange between district heating networks according to an embodiment of the present invention.
FIG. 5 is a flowchart showing a method of controlling a heat exchange between district heating networks by a heat exchange control system according to an embodiment of the present invention.

### [Modes of the Invention]

Since the present invention may have various modifications and several embodiments, exemplary embodiments thereof will be described in detail referring to the drawings. However, the present invention will not be limited to the exemplary embodiments but should be understood as including all modifications, equivalents, and substitutes included in the spirit and the technical scope of the present invention.

It will be understood that although the terms "first", "second", etc. may be used herein to describe various components, these components should not be limited by these terms. These terms are used merely to distinguish one element from another. For example, without departing from the scope of the present invention, a second component may be designated as a first component, and similarly, the first component may be designated as the second component. The term "and/or" includes any and all combinations or one of a plurality of associated listed items.

Also, terms "module' and "portion" used for components are given or mixed with each other only considering easiness of drafting the specification, which do not have mutually distinguished meanings or roles as themselves.

It will be understood that when a component is referred to as being "connected to" another component, it can be directly or indirectly connected to the other component. That is, for example, intervening components may be present. On the contrary, when a component is referred to as being "directly connected to" another component, it will be understood that there is no intervening component.

Terms are used herein only to describe the exemplary embodiments but not to limit the present invention. Singular expressions, unless defined otherwise in contexts, include plural expressions. In the present specification, terms "comprise" or "have", etc. are used to designate features, numbers, steps, operations, elements, components or combinations thereof disclosed in the specification as being present but not to exclude possibility of the existence or the addition of one or more other features, numbers, steps, operations, elements, components, or combinations thereof.

All terms including technical or scientific terms, unless defined otherwise, have the same meaning generally understood by a person of ordinary skill in the art. It will be understood that terms defined in generally used dictionaries are interpreted as including meanings identical to contextual meanings of the related art, unless clearly defined otherwise in the present application, are not interpreted as being ideal or excessively formal meanings.

Hereinafter, the embodiments of the present invention will be described with reference to the attached drawings. Throughout the specification, like reference numerals designate like elements and a repetitive description thereof will be omitted.

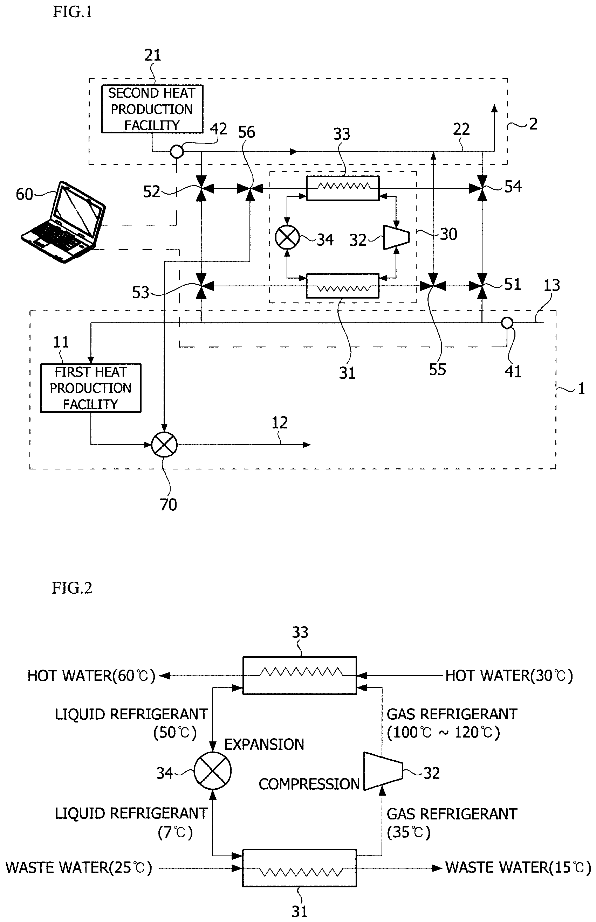

FIG. 1 is a structural diagram schematically showing a system for controlling a heat exchange between district heating networks according to an embodiment of the present invention. Also, FIG. 2 is a diagram for describing an operation of a heat pump according to an embodiment of the present invention.

Referring to FIG. 1, the heat exchange control system may include a heat pump 30 connected between different district heating networks 1 and 2 and configured to perform a bidirectional heat exchange. In addition, the heat exchange control system may include a first temperature sensor 41 configured to sense a temperature of a waste heat source collected through the first district heating network 1, a second temperature sensor 42 configured to sense a temperature of a heat source supplied through the second district heating network 2, at least one control valve 51, 52, 53, 54, 55, and 56 configured to control a flow of a heat source or a waste heat source between each heating network and the heat pump 30, and a control device 60 configured to manipulate each control value 51, 52, 53, 54, 55, and 56 to control a heat exchange direction, etc. The components shown in FIG. 1 are not essential. Thus, the district heating system may also be adapted to include more or fewer components than as shown in FIG. 1.

The first district heating network 1 is a district heating network based on a high-temperature heat source and may include a first heat production facility 11, a heat source supply pipe 12 connected to the first heat production facility 11 and configured to transport a heat source to a customer, a heat source return pipe 13 connected to the first heat production facility 11 and configured to collect a waste heat source that has been used by the customer. Here, the heat source indicates a medium for transferring heat produced by the heat production facility and may include a fluid such as high-temperature steam and hot water.

The first heat production facility 11 is a large-scale heat production facility for supplying a heat source to a customer such as a building located within a limited region, and functions to supply a high-temperature heat source heated using combined heat and power generation, etc. to a customer through the heat source supply pipe 12.

The high-temperature heat source supplied to the customer through the heat source supply pipe 12 is configured to transfer heat to a customer using a heat exchange, etc., and then circulated and collected through the heat source return pipe 13.

Since, characteristically, the first heat production facility 11 mainly uses combined heat and power generation to supply a heat source, the heat source can be supplied stably and consistently, and thus the heat source supplied or collected through the first district heating network 1 may maintain a certain temperature.

The second district heating network 2 is a district heating network based on distributed power, and is based on a heat source with a relatively low temperature, compared to the first district heating network 1. The second district heating network 2 may include a second heat production facility 21, a heat source supply pipe 22 connected to the second heat production facility 21 and configured to supply a heat source, etc.

The second heat production facility is a heat production facility based on distributed power, and a distributed power source based on new renewable energy may be used to produce heat. The new renewable energy is energy that converts and uses conventional fossil fuel or converts and uses renewable energy including sunlight, water, geothermal heat, biological organisms, etc.

A heat source heated by the second heat production facility 21 is supplied through the heat source supply pipe 22 in the form of hot water and is used by a customer to heat his/her house or water.

Since the second heat production facility 21 is characteristically based on the new renewable energy, and the amount of new renewable energy supplied fluctuates significantly, the temperature of the heat source supplied through the second district heating network 2 may fluctuate significantly and may be lower than that of the first heat production facility 11.

The heat pump 30 for a heat exchange between the two district heating networks 1 and 2 may be connected between the heat source return pipe 13 configured to collect a heat source over the first district heating network 1 and the heat source supply pipe 22 configured to transport a heat source generated by the second heat production facility 21 over the second district heating network 2.

The heat pump 30 is a device that acquires high-temperature heat by absorbing heat from a low-temperature heat source using exothermic and endothermic reactions of a refrigerant.

The heat pump 30 may be classified into a compression type, a chemical type, an absorption type, an adsorption type, etc. according to the principle of absorbing and radiating heat.

For convenience of description, an example in which the heat pump 30 is a compression type will be described. However, embodiments of the present invention are not limited thereto, and the heat pump 30 may operate as a chemical type, an absorption type, or an adsorption type.

The compression-type heat pump 30 may include an evaporator 31, a compressor 32, a condenser 33, an expander 34, and the like.

The evaporator 31 is a kind of heat exchanger, which is a device configured to evaporate a liquid refrigerant expanded by the expander 34 to generate a gas-phase refrigerant and collect heat from a fluid, such as air, water, etc.

Referring to FIG. 2, for example, when the liquid refrigerant is expanded by the expander 34 and transferred as wet vapor having a temperature of approximately 7°C, the evaporator 31 evaporates the refrigerant to generate a gas-phase refrigerant having a temperature of approximately 35°C. In this process, since heat is collected from waste water that passes through the evaporator 31, the temperature of the waste water decreases from approximately 25°C to approximately 15°C.

The compressor 32 is a device used to compress the refrigerant, and specifically, a device that compresses a low-temperature/low-pressure gas refrigerant transferred through the evaporator 31 to generate a high-temperature/high-pressure refrigerant to form a pressure difference that is a driving force for circulating the refrigerant.

Referring to FIG. 2, for example, when a gas refrigerant having a temperature of approximately 35°C is transferred from the evaporator 31, the compressor 32 compresses the gas refrigerant to a high-temperature/high-pressure state of approximately 100°C to 120°C and transfers the compressed gas refrigerant to the condenser 33.

The condenser 33 is a device that changes the high-temperature/high-pressure gas refrigerant transferred through the compressor 32 into a cooled liquid refrigerant. The gas refrigerant including heat collected by the evaporator 31 is cooled by passing through the condenser 33. In this process, as the liquid refrigerant is changed into a liquid state, heat is radiated and transferred to a fluid, such as air or water.

Referring to FIG. 2, for example, when a gas refrigerant which is in a high-temperature/high-pressure of 100°C to 120°C is transferred from the compressor 32, the condenser 33 condenses the gas refrigerant to change the condensed gas refrigerant into a liquid refrigerant having a temperature of approximately 50°C. In this process, since heat is transferred to hot water that passes through the condenser 33, the temperature of the hot water increases from approximately 30°C to approximately 60°C.

The expander 34 expands the high-pressure liquid refrigerant transferred through the condenser 33 and transfers a low-pressure refrigerant to the evaporator 31.

Referring to FIG. 2, for example, when a liquid refrigerant having a temperature of approximately 50°C is transferred from the condenser 33, the expander 34 expands the liquid refrigerant to change the liquid refrigerant into wet vapor having a temperature of approximately 7°C.

As described above, the heat pump 30 may function to collect heat from low-temperature waste water using a refrigerant and radiate the heat to change the temperature of the heat source to a high-temperature.

Referring back to FIG. 1, the heat source return pipe 13 of the first district heating network 1 and the heat source supply pipe 22 of the second district heating network 2 are connected to the heat pump 30. While a waste heat source collected through the heat source return pipe 13 of the first district heating network 1 and a heat source supplied through the heat source supply pipe 22 of the second district heating network 2 pass through the heat pump 30, the temperature of the waste heat source and the heat source may increase because heat may be collected or absorbed therefrom.

That is, the heat pump 30 collects heat from any one of the waste heat source collected through the heat source return pipe 13 from the first district heating network 1 and the heat source supplied through the heat source supply pipe 22 by the second district heating network 2. Then, the heat pump 30 increases the temperature of the waste heat source being collected by the first district heating network 1 and the heat source being supplied by the second district heating network 2 using the collected heat.

Each valve 51, 52, 53, 54, 55, and 56 functions to control a flow of a heat source between the pipes 12, 13, and 22 or between each pipe 12, 13, and 22 and the heat pump 30 on the basis of a control signal of the control device 60.

For example, a first control valve 51 may be connected between the heat source return pipe 13 of the first district heating network 1 and the evaporator 31 and condenser 33 of the heat pump 30 and configured to selectively enable the waste heat source collected through the heat source return pipe 13 to flow into the evaporator 31 or the condenser 33 of the heat pump 30.

In addition, for example, a second control valve 52 may be connected between the heat source supply pipe 22 of the second district heating network 2 and the evaporator 31 and condenser 33 of the heat pump 30 and configured to selectively enable the heat source supplied through the heat source supply pipe 22 to flow into the evaporator 31 or the condenser 33 of the heat pump 30.

In addition, for example, a third control valve 53 may be connected among the heat source supply pipe 22 of the second district heating network 2, the heat source return pipe 13 of the first district heating network 1, and the evaporator 31 of the heat pump 30 and configured to introduce the waste heat source from which heat has been collected by passing through the evaporator 31 into the heat source return pipe 13 of the first district heating network 1 or supply a heat source introduced from the heat source supply pipe 22 of the second district heating network 2 through the second control valve 52 to the evaporator 31.

In addition, for example, a fourth control valve 54 may be connected among the heat source supply pipe 22 of the second district heating network 2, the heat source return pipe 13 of the first district heating network 1, and the condenser 33 of the heat pump 30 and configured to introduce the heat source from which heat has been absorbed by passing through the condenser 33 into the heat source supply pipe 22 of the second district heating network 2 or supply, a waste heat source introduced from the heat source return pipe 13 of the first district heating network 1 through the first control valve 51 to the condenser 33.

In addition, for example, a fifth control valve 55 may be connected between the evaporator 31 of the heat pump 30 and the heat source supply pipe 22 of the second district heating network 2 and function to introduce or block the heat source from which heat has been collected by the evaporator 31 of the heat pump 30 into or from the heat source supply pipe 22 of the second district heating network 2.

In addition, for example, a sixth control valve 56 may be connected between the condenser 33 of the heat pump 30 and a mixer 70 disposed in the heat source supply pipe 12 of the first district heating network 1 and function to introduce or block the waste heat source to which heat has been supplied by the condenser 33 of the heat pump 30 into or from the mixer 70 installed in the heat source supply pipe 12 of the first district heating network 1. The waste heat source heated to a high temperature by absorbing heat while passing through the condenser 33 may not be circulated to the first heat production facility 11, but may immediately be mixed with a high-temperature heat source supplied through the first heat production facility 11 by the mixer 70 and then be supplied to a customer through the heat source supply pipe 12.

First and second temperature sensors 41 and 42 function to sense the temperature of the waste heat source collected through the heat source return pipe 13 of the first district heating network 1 and the heat source supplied through the heat source supply pipe 22 of the second district heating network 2. For this, the first and second temperature sensors 41 and 42 may be disposed in the heat source return pipe 13 of the first district heating network 1 and the heat source supply pipe 22 of the second district heating network 2, respectively.

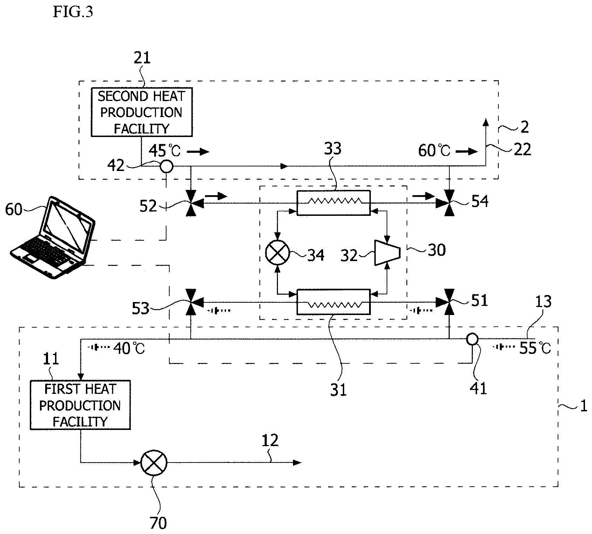

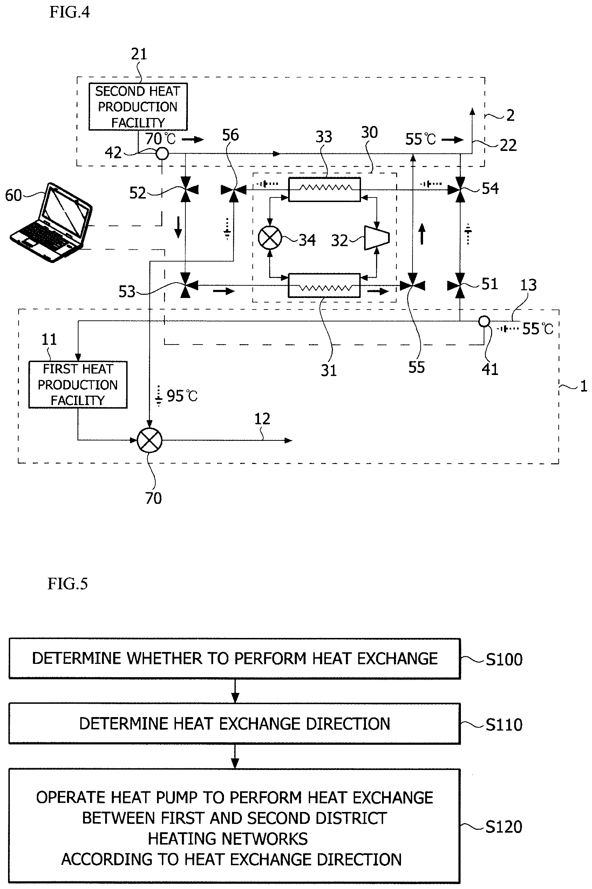

The control device 60 determines whether to allow a heat exchange between the first district heating network 1 and the second district heating network 2 on the basis of temperature information acquired through the first and second temperature sensors 41 and 42 or efficiency of the heat pump 30. In addition, when the heat exchange between the two district heating networks is allowed, the control device 60 determines a heat exchange direction of the heat pump 30 on the basis of the temperature information acquired through the first and second temperature sensors 41 and 42 and controls each control valve 51, 52, 53, 54, 55, and 56 to allow a heat source to flow among the heat source return pipe 13 of the first district heating network 1, the heat source supply pipe 22 of the second district heating network 2, and the heat pump according to the heat exchange direction. An operation of the control device 60 that controls a heat exchange flow on the basis of the temperature information acquired from the first and second temperature sensors 41 and 42 will be described below in detail with reference to FIGS. 3 and 4.

FIGS. 3 and 4 show examples in which a heat exchange direction is controlled in a system for exchanging heat between district heating networks according to an embodiment of the present invention.

Referring to FIG. 3, the temperature of the waste heat source collected through the heat source return pipe 13 from the first district heating network 1 is 55°C and is higher than 45°C, which is the temperature of the heat source supplied through the heat source supply pipe 22 by the second district heating network 2.

Thus, the control device 60 operates the heat pump 30 in a forward direction to collect heat from the waste heat source collected through the heat source return pipe 13 and then supply the collected heat to the heat source supplied through the second district heating network 2.

For this, the control device 60 controls the first control valve 51 to allow the waste heat source collected through the heat source return pipe 13 from the first district heating network 1 to flow into the evaporator 31 of the heat pump 30 and controls the third control valve 53 to allow the waste heat source from which heat has been collected and then radiated by the evaporator 31 to flow back into the heat source return pipe 13 of the first district heating network 1. Thus, since heat is collected from the waste heat source collected through the heat source return pipe 13 from the first district heating network 1 while the waste heat source passes through the evaporator 31, the temperature of the waste heat source decreases to 40°C.

In addition, the control device 60 controls the second control valve 52 to allow the heat source supplied through the heat source supply pipe 22 by the second district heating network 2 to flow into the condenser 33 of the heat pump 30 and controls the fourth control valve 54 to allow the heat source to which heat has been supplied by the condenser 33 to flow back into the heat source supply pipe 22 of the second district heating network 2. Thus, since heat is absorbed by the heat source supplied through the heat source supply pipe 22 by the second district heating network 2 while the heat source passes through the condenser 33, the temperature of the heat source increases to 60°C.

It is advantageous that the temperature of the waste heat source used in and collected from a district heating network be low. Therefore, when the temperature of the waste heat source collected from the first district heating network 1 is higher than the temperature of the heat source supplied by the second district heating network 2, heat is collected from the waste heat source collected through the heat source return pipe 13 and then is supplied to the heat source supplied through the second district heating network 2. Thus, it becomes possible to reduce the heat of the waste heat source and thus minimize heat loss.

Referring to FIG. 4, the temperature of the waste heat source collected through the heat source return pipe 13 from the first district heating network 1 is 55°C and is lower than 70°C, which is the temperature of the heat source supplied through the heat source supply pipe 22 by the second district heating network 2.

Thus, the control device 60 operates the heat pump 30 in a reverse direction to collect heat from the heat source transported through the heat source supply pipe 22 in the second district heating network 2 and then supply the collected heat to the waste heat source collected through the first district heating network 1.

For this, the control device 60 controls the second control valve 52 and the third control valve 53 to allow the heat source supplied through the heat source supply pipe 22 by the second district heating network 2 to flow into the evaporator 31 of the heat pump 30 and controls the fifth control valve 55 to allow the heat source from which heat has been collected and then radiated by the evaporator 31 to flow back into the heat source supply pipe 22 of the second district heating network 2. Thus, since heat is collected from the heat source supplied by the second district heating network 2 while the heat source passes through the evaporator 31, the temperature of the heat source decreases to 55°C.

In addition, the control device 60 controls the first control valve 51 and the fourth control valve 54 to allow at least some of the waste heat source collected through the heat source return pipe 13 from the first district heating network 1 to flow into the condenser 33 of the heat pump 30 and controls the sixth control valve 56 to allow the waste heat source to which heat has been supplied by the condenser 33 to flow into the mixer 70 installed in the heat source supply pipe 12 of the first district heating network 1. Thus, since heat is absorbed to the waste heat source collected through the heat source return pipe 13 from the first district heating network 1 while the waste heat source passes through the condenser 33, the temperature of the waste heat source increases to 95°C. The waste heat source having the increased temperature need not be collected back by the first heat production facility 11 and may be introduced into the heat source supply pipe 12 through the mixer 70 and then directly supplied to a customer.

The heat source supplied through the second district heating network 2 need not maintain a high temperature when the heat source is directly used to heat hot tap water. Accordingly, it is possible to enhance thermal efficiency and reduce fuel used to reheat the heat source to decrease the amount of fuel used by collecting some of the heat from the heat source supplied through the second district heating network 2 to increase the temperature of the waste heat source used in and collected from the first district heating network 1 and directly supplying the waste heat source having the increased temperature to the heat source.

FIG. 5 is a flowchart showing a method of controlling a heat exchange between district heating networks by a heat exchange control system according to an embodiment of the present invention.

Referring to FIG. 5, a control device 60 of the heat exchange control system determines whether to perform a heat control between a first district heating network 1 and a second district heating network 2 (S100).

In S100, the control device 60 may determine whether to perform a heat exchange on the basis of temperature information acquired from the first district heating network 1 and the second district heating network 2.

In this case, the control device 60 continuously acquires a first temperature of the waste heat source collected through the first district heating network 1 and a second temperature of the heat source supplied through the second district heating network 2, by using first and second temperature sensors 41 and 42 disposed in the first and second district heating networks 1 and 2, respectively. Then, the control device 60 compares the first temperature and the second temperature and determines to perform the heat exchange between the two district heating networks 1 and 2 when a difference between the first temperature and the second temperature is equal to or greater than a predetermined threshold. On the other hand, when the difference between the first temperature and the second temperature is less than the threshold, the control device 60 blocks the heat exchange between the two district heating networks 1 and 2.

In S100, the control device 60 may determine whether to perform the heat exchange on the basis of thermal efficiency of the heat pump 30.

In this case, the control device 60 continuously acquires information, such as a temperature, a flow rate, etc., regarding the waste heat source collected through the first district heating network 1 and the heat source supplied through the second district heating network 2. Then, the control device 60 calculates forward efficiency and reverse efficiency of the heat pump 30 on the basis of the acquired information. The efficiency of the heat pump 30 may correspond to a ratio of energy output from the heat pump 30 to energy input to the heat pump 30 and may be represented by a coefficient of performance (COP). When at least one of the forward efficiency and the reverse efficiency of the heat pump 30 is equal to or greater than a predetermined threshold, the control device 60 determines to perform a heat exchange between the two district heating networks 1 and 2. On the other hand, when both of the forward efficiency and the reverse efficiency is less than the threshold, the control device 60 blocks the heat exchange between the two district heating networks 1 and 2. For example, when at least one of the forward efficiency and the reverse efficiency is equal to or greater than COP 2, the control device 60 allows the heat exchange between the two district heating networks 1 and 2.

Next, when the heat exchange is allowed, the control device 60 determines a heat exchange direction of the heat pump 30 (S110).

In S110, the control device 60 may determine the heat exchange direction on the basis of the temperature information acquired from the first district heating network 1 and the second district heating network 2.

In this case, the control device 60 compares the first temperature of the waste heat source collected through the first district heating network 1 and the second temperature of the heat source supplied through the second district heating network 2, and determines the heat exchange direction of the heat pump 30 to be the forward direction when the first temperature is higher than the second temperature. On the other hand, when the second temperature is higher than the first temperature, the control device 60 determines the heat exchange direction of the heat pump 30 to be the reverse direction.

In S110, the control device 60 may determine the heat exchange direction on the basis of thermal efficiency of the heat pump 30.

In this case, the control device 60 calculates forward efficiency and reverse efficiency of the heat pump 30, and determines the heat exchange direction of the heat pump 30 to be the forward direction when the forward efficiency of the heat pump 30 is higher than the reverse efficiency of the heat pump 30. On the other hand, when the reverse efficiency of the heat pump 30 is higher than the forward efficiency of the heat pump 30, the control device 60 determines the heat exchange direction of the heat pump 30 to be the reverse direction.

Next, when the heat exchange direction is determined, the control device 60 operates the heat pump 30 to perform a heat exchange between the first and second district heating networks 1 and 2 in the heat exchange direction (S120).

In S120, since the forward heat exchange method and the reverse heat exchange method of the heat pump 30 have been described in detail with reference to FIGS. 3 and 4, a detailed description thereof will be omitted.

As described above, the heat exchange control system according to an embodiment of the present invention can decrease fuel consumption of a district heating network and increase its thermal efficiency by utilizing a waste heat source that has been used and collected to increase the temperature of a heat source supplied by another district heating network through a heat exchange between the district heating networks or by using a low-temperature heat source supplied by the other district heating network to increase the temperature of the used and collected waste heat source to resupply the waste heat source as a heat source.

The term "unit" used herein denotes a hardware component such as software or field programmable gate array (FPGA) or application specific integrated circuit (ASIC), and the unit performs any role. However, the "unit" is not limited to the software or hardware. The unit may be configured to be in an addressable storage medium or to execute one or more processors. Accordingly, as an example, the unit includes elements such as software elements, object-oriented software elements, class elements, and task elements, processes, functions, attributes, procedures, subroutines, segments of program codes, drivers, firmware, micro-codes, circuits, data, database, data structures, tables, arrays, and variables. Furthermore, functions provided in the elements and the units may be combined as a smaller number of elements and units or further divided into additional elements and units. Additionally, the elements and units may be implemented to execute one or more CPUs in a device or a security multimedia card.

While the present invention has been preferentially shown and described with reference to exemplary embodiments thereof, it will be understood by those of ordinary skill in the art that various changes in form and details may be made therein without departing from the spirit and scope of the present invention as defined by the following claims.

## Claims

1. A system for controlling a heat exchange between different district heating networks, the system comprising:
a heat pump (30) connected between a return pipe (13) of a first district heating network (1) and a supply pipe (22) of a second district heating network (2) and configured to perform a heat exchange between a first heat source of the return pipe (13) of the first district heating network (1) and a second heat source of the supply pipe of the second district heating network (2)
**characterized in that** the system further comprises
a plurality of temperature sensors (41, 42) configured to acquire temperatures of the first heat source and the second heat source; and
a control device (60) configured to control a heat exchange direction of the heat pump (30) between the first heat source and the second heat source based on the temperatures of the first heat source and the second heat source.

2. The system of claim 1, further comprising a plurality of control valves (51-56) disposed between the return pipe (13) of the first district heating network (1) and the heat pump (30) and between the supply pipe (22) of the second district heating network (2) and the heat pump (30) and configured to control flows of the first heat source and the second heat source based on a control signal of the control device (60).

3. The system of claim 1, wherein the control device operates the heat pump (30) to perform the heat exchange between the first heat source (1) and the second heat source (2) when a temperature difference between the first heat source and the second heat source is equal to or greater than a threshold, or when forward efficiency or reverse efficiency of the heat pump is equal to or greater than a threshold.

4. The system of claim 1, wherein the control device operates the heat pump to absorb heat from the first heat source and supply the heat to the second heat source when a temperature of the first heat source is higher than a temperature of the second heat source, and
wherein the control device operates the heat pump to absorb heat from the second heat source and supply the heat to the first heat source when a temperature of the first heat source is lower than a temperature of the second heat source.

5. The system of claim 4, wherein the first heat source having the temperature increased by the heat pump flows in a third pipe for heat source supply of the first district heating network.

6. The system of claim 5, further comprising a mixer disposed in the third pipe and configured to mix the first heat source having the temperature increased by the heat pump with the third heat source supplied through the third pipe.

7. The system of claim 1, wherein the first district heating network is a high-temperature network based on combined heat and power generation, and the second district heating network is a low-temperature network based on distributed power.

8. A method of controlling a heat exchange between different district heating networks by a heat exchange control system, the method comprising:
acquiring temperatures of a first heat source returned through a return pipe of a first district heating network and a second heat source supplied through a supply pipe of a second district heating network;
determining a heat exchange direction based on the temperatures of the first heat source and the second heat source; and
operating a heat pump connected between the return pipe of the first district heating network and the supply pipe of the second district heating network to perform a heat exchange between the first heat source and the second heat source according to the heat exchange direction.

9. The method of claim 8, further comprising controlling a plurality of control valves disposed between the return pipe of the first district heating network and the heat pump and between the supply pipe of the second district heating network and the heat pump and configured to allow the first heat source and the second heat source to flow into the heat pump according to the heat exchange direction.

10. The method of claim 8, further comprising allowing the heat exchange between the first heat source and the second heat source when a temperature difference between the first heat source and the second heat source is equal to or greater than a threshold.

11. The method of claim 8, further comprising:
calculating forward efficiency and reverse efficiency of the heat pump; and
allowing the heat exchange between the first heat source and the second heat source when the forward efficiency or the reverse efficiency is equal to or greater than a threshold.

12. The method of claim 8, wherein the determining of the heat exchange direction further comprises determining the heat exchange direction of the heat pump such that heat is absorbed from the first heat source and then supplied to the second heat source when a temperature of the first heat source is higher than a temperature of the second heat source.

13. The method of claim 8, wherein the determining of the heat exchange direction further comprises determining the heat exchange direction of the heat pump such that heat is absorbed from the second heat source and then supplied to the first heat source when a temperature of the first heat source is lower than a temperature of the second heat source.

14. The method of claim 8, wherein the first district heating network is a high-temperature network based on combined heat and power generation, and the second district heating network is a low-temperature network based on distributed power.

15. A recording medium storing a program which, when executed by a control device, causes the control device to execute the method of any one of claims 8 to 14.

## Patentansprüche

1. System zur Steuerung eines Wärmeaustauschs zwischen unterschiedlichen Fernwärmenetzen, wobei das System aufweist:
eine Wärmepumpe (30), die zwischen eine Rücklaufleitung (13) eines ersten Fernwärmenetzes (1) und eine Vorlaufleitung (22) eines zweiten Fernwärmenetzes (2) geschaltet und konfiguriert ist, einen Wärmeaustausch zwischen einer ersten Wärmequelle der Rücklaufleitung (13) des ersten Fernwärmenetzes (1) und einer zweiten Wärmequelle der Vorlaufleitung des zweiten Fernwärmenetzes (2) durchzuführen,
**dadurch gekennzeichnet, dass** das System ferner aufweist:
mehrere Temperatursensoren (41, 42), die konfiguriert sind, Temperaturen der ersten Wärmequelle und der zweiten Wärmequelle zu erfassen; und
eine Steuervorrichtung (60), die konfiguriert ist, eine Wärmeaustauschrichtung der Wärmepumpe (30) zwischen der ersten Wärmequelle und der zweiten Wärmequelle beruhend auf den Temperaturen der ersten Wärmequelle und der zweiten Wärmequelle zu steuern.

2. System nach Anspruch 1, das ferner mehrere Steuerventile (51-56) aufweist, die zwischen der Rücklaufleitung (13) des ersten Fernwärmenetzes (1) und der Wärmepumpe (30) und zwischen der Vorlaufleitung (22) des zweiten Fernwärmenetzes (2) und der Wärmepumpe (30) angeordnet und konfiguriert sind, die Flüsse der ersten Wärmequelle und der zweiten Wärmequelle beruhend auf einem Steuersignal der Steuervorrichtung (60) zu steuern.

3. System nach Anspruch 1, wobei die Steuervorrichtung die Wärmepumpe (30) betreibt, um den Wärmeaustausch zwischen der ersten Wärmequelle (1) und der zweiten Wärmequelle (2) durchzuführen, wenn eine Temperaturdifferenz zwischen der ersten Wärmequelle und der zweiten Wärmequelle gleich oder größer als ein Schwellenwert ist oder ein Vorwärtswirkungsgrad oder Rückwärtswirkungsgrad der Wärmepumpe gleich oder größer als ein Schwellenwert ist.

4. System nach Anspruch 1, wobei die Steuervorrichtung die Wärmepumpe betreibt, um Wärme aus der ersten Wärmequelle aufzunehmen und die Wärme der zweiten Wärmequelle zuzuführen, wenn eine Temperatur der ersten Wärmequelle höher ist als eine Temperatur der zweiten Wärmequelle, und
wobei die Steuervorrichtung die Wärmepumpe betreibt, um Wärme aus der zweiten Wärmequelle aufzunehmen und die Wärme der ersten Wärmequelle zuzuführen, wenn eine Temperatur der ersten Wärmequelle niedriger ist als eine Temperatur der zweiten Wärmequelle.

5. System nach Anspruch 4, wobei die erste Wärmequelle, deren Temperatur durch die Wärmepumpe erhöht worden ist, in eine dritte Leitung zur Wärmequellenversorgung des ersten Fernwärmenetzes fließt.

6. System nach Anspruch 5, das ferner eine Mischer aufweist, der in der dritten Leitung angeordnet und konfiguriert ist, die erste Wärmequelle, deren Temperatur durch die Wärmepumpe erhöht worden ist, mit der dritten Wärmequelle zu mischen, die durch die dritte Leitung zugeführt wird.

7. System nach Anspruch 1, wobei das erste Fernwärmenetz ein Hochtemperaturnetz ist, das auf Kraft-Wärme-Kopplung beruht, und das zweite Fernwärmenetz ein Niedertemperaturnetz ist, das auf dezentraler Energieversorgung beruht.

8. Verfahren zum Steuern eines Wärmeaustauschs zwischen unterschiedlichen Fernwärmenetzen durch eine Wärmeaustausch-Steuersystem, wobei das Verfahren aufweist:
Erfassen von Temperaturen einer ersten Wärmequelle, die durch eine Rücklaufleitung eines ersten Fernwärmenetzes zurückgeschickt wird, und einer zweiten Wärmequelle,
die durch eine Vorlaufleitung eines zweiten Fernwärmenetzes zugeführt wird;
Bestimmen einer Wärmeaustauschrichtung beruhend auf den Temperaturen der ersten Wärmequelle und der zweiten Wärmequelle; und
Betreiben einer Wärmepumpe, die zwischen die Rücklaufleitung des ersten Fernwärmenetzes und die Vorlaufleitung des zweiten Fernwärmenetzes geschaltet ist, um einen Wärmeaustausch zwischen der ersten Wärmequelle und der zweiten Wärmequelle gemäß der Wärmeaustauschrichtung durchzuführen.

9. Verfahren nach Anspruch 8, das ferner das Steuern einer Vielzahl von Steuerventilen aufweist, die zwischen der Rücklaufleitung des ersten Fernwärmenetzes und der Wärmepumpe und zwischen der Vorlaufleitung des zweiten Fernwärmenetzes und der Wärmepumpe angeordnet und konfiguriert sind, es zu ermöglichen, dass die erste Wärmequelle und die zweite Wärmequelle gemäß der Wärmeaustauschrichtung in die Wärmepumpe fließen.

10. Verfahren nach Anspruch 8, das ferner das Ermöglichen des Wärmeaustauschs zwischen der ersten Wärmequelle und der zweiten Wärmequelle aufweist, wenn eine Temperaturdifferenz zwischen der ersten Wärmequelle und der zweiten Wärmequelle gleich oder größer als ein Schwellenwert ist.

11. Verfahren nach Anspruch 8, das ferner aufweist:
Berechnen eines Vorwärtswirkungsgrads und eines Rückwärtswirkungsgrads der Wärmepumpe; und
Ermöglichen des Wärmeaustauschs zwischen der ersten Wärmequelle und der zweiten Wärmequelle, wenn der Vorwärtswirkungsgrad oder Rückwärtswirkungsgrad gleich oder größer als ein Schwellenwert ist.

12. Verfahren nach Anspruch 8, wobei das Bestimmen der Wärmeaustauschrichtung ferner das Bestimmen der Wärmeaustauschrichtung der Wärmepumpe aufweist, so dass Wärme aus der ersten Wärmequelle aufgenommen wird und dann der zweiten Wärmequelle zugeführt wird, wenn eine Temperatur der ersten Wärmequelle höher ist als eine Temperatur der zweiten Wärmequelle.

13. Verfahren nach Anspruch 8, wobei das Bestimmen der Wärmeaustauschrichtung ferner das Bestimmen der Wärmeaustauschrichtung der Wärmepumpe aufweist, so dass Wärme aus der zweiten Wärmequelle aufgenommen wird und dann der ersten Wärmequelle zugeführt wird, wenn eine Temperatur der ersten Wärmequelle niedriger ist als eine Temperatur der zweiten Wärmequelle.

14. Verfahren nach Anspruch 8, wobei das erste Fernwärmenetz ein Hochtemperaturnetz ist, das auf Kraft-Wärme-Kopplung beruht, und das zweite Fernwärmenetz ein Niedertemperaturnetz ist, das auf dezentraler Energieversorgung beruht.

15. Aufzeichnungsmedium, das ein Programm speichert, das, wenn es durch eine Steuervorrichtung ausgeführt wird, die Steuervorrichtung veranlasst, das Verfahren nach einem der Ansprüche 8 bis 14 auszuführen.

## Revendications

1. Système de commande d'échange de chaleur entre différents réseaux de chauffage urbain, ledit système comprenant :
une pompe à chaleur (30) raccordée entre une conduite de retour (13) d'un premier réseau de chauffage urbain (1) et une conduite d'amenée (22) d'un deuxième réseau de chauffage urbain (2) et prévue pour effectuer un échange de chaleur entre une première source de chaleur de la conduite de retour (13) du premier réseau de chauffage urbain (1) et une deuxième source de chaleur de la conduite d'amenée du deuxième réseau de chauffage urbain (2),
**caractérisé en ce que** ledit système comprend en outre
une pluralité de capteurs de température (41, 42) prévus pour détecter des températures de la première source de chaleur et de la deuxième source de chaleur ; et
un dispositif de commande (60) prévu pour commander un sens d'échange de chaleur de la pompe à chaleur (30) entre la première source de chaleur et la deuxième source de chaleur sur la base des températures de la première source de chaleur et de la deuxième source de chaleur.

2. Système selon la revendication 1, comprenant en outre une pluralité de vannes de régulation (51-56) disposées entre la conduite de retour (13) du premier réseau de chauffage urbain (1) et la pompe à chaleur (30) et entre la conduite d'amenée (22) du deuxième réseau de chauffage urbain (2) et la pompe à chaleur (30), et prévues pour commander la circulation de la première source de chaleur et de la deuxième source de chaleur sur la base d'un signal de commande du dispositif de commande (60).

3. Système selon la revendication 1, où le dispositif de commande active la pompe à chaleur (30) pour l'exécution de l'échange de chaleur entre la première source de chaleur (1) et la deuxième source de chaleur (2) quand une différence de température entre la première source de chaleur et la deuxième source de chaleur est égale ou supérieure à un seuil, ou quand le débit avant ou le débit arrière de la pompe à chaleur sont égaux ou supérieurs à un seuil.

4. Système selon la revendication 1, où le dispositif de commande active la pompe à chaleur pour l'absorption de chaleur de la première source de chaleur et le refoulement de chaleur vers la deuxième source de chaleur quand une température de la première source de chaleur est supérieure à une température de la deuxième source de chaleur, et où le dispositif de commande active la pompe à chaleur pour l'absorption de chaleur de la deuxième source de chaleur et le refoulement chaleur vers la première source de chaleur quand une température de la première source de chaleur est inférieure à une température de la deuxième source de chaleur.

5. Système selon la revendication 4, où la première source de chaleur dont la température est élevée par la pompe à chaleur circule dans une troisième conduite pour l'amenée de la source de chaleur au premier réseau de chauffage urbain.

6. Système selon la revendication 5, comprenant en outre un mélangeur disposé dans la troisième conduite et prévus pour mélanger la première source de chaleur à température élevée par la pompe à chaleur à la troisième source de chaleur amenée par la troisième conduite.

7. Système selon la revendication 1, où le premier réseau de chauffage urbain est un réseau à haute température sur la base d'une génération de puissance et de chaleur combinée, et le deuxième réseau de chauffage urbain est un réseau à basse température sur la base de la puissance fournie.

8. Procédé de commande d'un échange de chaleur entre différent réseaux de chauffage urbain par un système de commande d'échange de chaleur, ledit procédé comprenant :
l'acquisition de températures d'une première source de chaleur retournée par une conduite de retour d'un premier réseau de chauffage urbain et d'une deuxième source de chaleur amenée par une conduite d'amenée d'un deuxième réseau de chauffage urbain ;
la détermination d'un sens d'échange de chaleur sur la base des températures de la première source de chaleur et de la deuxième source de chaleur ; et
l'activation d'une pompe à chaleur raccordée entre la conduite de retour du premier réseau de chauffage urbain et la conduite d'amenée du deuxième réseau de chauffage urbain pour effectuer un échange de chaleur entre la première source de chaleur et la deuxième source de chaleur conformément au sens d'échange de chaleur.

9. Procédé selon la revendication 8, comprenant en outre la commande d'une pluralité de vannes de régulation disposées entre la conduite de retour du premier réseau de chauffage urbain et la pompe à chaleur et entre la conduite d'amenée du deuxième réseau de chauffage urbain et la pompe à chaleur, et prévus pour permettre la circulation de la première source de chaleur et de la deuxième source de chaleur dans la pompe à chaleur conformément au sens d'échange de chaleur.

10. Procédé selon la revendication 8, comprenant en outre l'exécution de l'échange de chaleur entre la première source de chaleur et la deuxième source de chaleur quand une différence de température entre la première source de chaleur et la deuxième source de chaleur est égale ou supérieure à un seuil.

11. Procédé selon la revendication 8, comprenant en outre :
le calcul du débit avant et du débit arrière de la pompe à chaleur ; et
l'exécution de l'échange de chaleur entre la première source de chaleur et la deuxième source de chaleur quand le débit avant ou le débit arrière sont égaux ou supérieurs à un seuil.

12. Procédé selon la revendication 8, où la détermination du sens d'échange de chaleur comprend en outre la détermination du sens d'échange de chaleur de la pompe à chaleur de sorte que la chaleur est absorbée par la première source de chaleur puis amenée à la deuxième source de chaleur quand une température de la première source de chaleur est supérieure à une température de la deuxième source de chaleur.

13. Procédé selon la revendication 8, où la détermination du sens d'échange de chaleur comprend en outre la détermination du sens d'échange de chaleur de la pompe à chaleur de sorte que la chaleur est absorbée par la deuxième source de chaleur puis amenée à la première source de chaleur quand une température de la première source de chaleur est inférieure à une température de la deuxième source de chaleur.

14. Procédé selon la revendication 8, où le premier réseau de chauffage urbain est un réseau à haute température sur la base d'une génération de puissance et de chaleur combinée, et le deuxième réseau de chauffage urbain est un réseau à basse température sur la base de la puissance fournie.

15. Support d'enregistrement stockant un programme dont l'exécution par un dispositif de commande entraîne l'exécution par le dispositif de commande du procédé selon l'une des revendications 8 à 14.
